# EUROPÄISCHE PATENTANMELDUNG

(11) **EP 2 085 746 A2**
(43) Veröffentlichungstag der Anmeldung: **05.08.2009**
(21) Anmeldenummer: 08001979.7
(22) Anmeldetag: 02.02.2008
(51) Int. Cl.: G01C 3/04, F41G 3/06, G01S 7/481, G01S 17/08, G02B 23/10

(54) **Beobachtungsgeraet mit Entfernungsmesser**

(30) Priorität: 31.01.2008 AT 153082008; 01.02.2008 AT
(71) Anmelder: SWAROVSKI OPTIK KG, 6067 Absam (CH)
(72) Erfinder: Lancaster, Gavin, 6020 Innsbruck (AT); Roider, Konrad A., 6068 Mils (AT)
(74) Vertreter: Burger, Hannes

(57) **Zusammenfassung**

Die Erfindung betrifft ein binokulares Beobachtungsgerät, insbesondere Fernglas, mit zwei visuellen Strahlengängen und mit einem Laser-Entfernungsmesser mit einem Lasersender und einem Laserempfänger und mit einem opto-elektronischen Anzeigeelement. Dabei ist ein Teil eines Strahlengangs des Lasersenders in einen ersten visuellen Strahlengang integriert, wobei weiters auch ein Teil eines Strahlengang des Laserempfängers in den ersten visuellen Strahlengang integriert ist.

## Beschreibung

Die Erfindung betrifft ein binokulares Beobachtungsgerät, insbesondere ein Fernglas bzw. eine fernoptische Einrichtung mit einem Laser-Entfernungsmesser entsprechend den Merkmalen der Oberbegriffe der Ansprüche 1, 5, 6, 10 und 11.

Es sind bereits binokulare Ferngläser mit einem Laser-Entfernungsmesser bekannt, bei denen in einem der beiden visuellen Strahlengänge auch ein Funktionselement des Laser-Entfernungsmessers integriert ist. So ist bspw. in der DE 10 2004 054 182 B4 beschrieben, dass der objektivseitige Strahlengang eines der beiden Beobachtungsstrahlengänge des Feldstechers gleichzeitig auch einen Teil des Strahlengangs des Laserempfängers bildet und die vom Objekt reflektierte Laserstrahlung mit Hilfe eines optischen Teilers zu dem Laserempfänger bzw. Detektor umgelenkt wird. Andererseits ist für den Lasersender ein baulich separierter Strahlengang vorgesehen, der im Bereich der Gelenkachse des Feldstechers angeordnet und parallel zu den Beobachtungsachsen der visuellen Strahlengänge ausgerichtet ist. Dazu ist vor dem Lasersender lichtaustrittsseitig eine Kollimationslinse vorgesehen. Nachteilig ist dabei, dass bei Entfernungsmessungen auf kürzere Distanz Messabweichungen auf Grund des Parallaxenfehlers auftreten können.

Die Aufgabe der Erfindung ist es ein binokulares Beobachtungsgerät bzw. eine fernoptische Einrichtung mit einem Laser-Entfernungsmesser derart zu verbessern, dass eine höhere Genauigkeit bzw. eine höhere Zuverlässigkeit der relativen Ausrichtung der optischen Achsen der Strahlengänge des Lasersenders und des Laserempfängers zueinander bzw. zu der optischen Achse des visuellen Strahlengangs erreicht wird. Eine weitere Aufgabe der Erfindung ist es eine Erhöhung der Effizienz der Entfernungsmessung hinsichtlich der erforderlichen Laserleistung zu erreichen. Weiters ist es auch eine Aufgabe der Erfindung ein Verfahren zur Beobachtung und Messung der Entfernung eines entfernten Objektes zu schaffen mit dem eine erhöhte Bedienerfreundlichkeit erreicht wird.

Die Aufgabe der Erfindung wird durch ein binokulares Beobachtungsgerät entsprechend den Merkmalen des Anspruchs 1 gelöst. Demgemäß ist das binokulare Beobachtungsgerät, insbesondere Fernglas, mit zwei visuellen Strahlengängen und mit einem Laser-Entfernungsmesser mit einem Lasersender und einem Laserempfänger und mit einem opto-elektronischen Anzeigeelement ausgebildet, wobei ein Teil eines Strahlengangs des Lasersenders in einen ersten visuellen Strahlengang integriert ist und wobei auch ein Teil eines Strahlengang des Laserempfängers in den ersten visuellen Strahlengang integriert ist.

Vorteilhaft ist hier nun, dass der ausgesendete Messstrahl für die Feststellung der Entfernung zwischen dem Beobachtungsgerät und einem entfernten Objekt exakt auf den visuellen Strahlengang ausgerichtet ist. Dadurch kann der Aufwand an optischen Elementen verringert werden, wodurch auch das Gewicht der Beobachtungsgeräte verringert werden kann.

Unabhängig davon liegt ein weiterer Vorteil darin, dass durch die Zusammenführung des Strahlengangs des ausgesendeten und zurück reflektierten Messstrahls und des visuellen Strahlenganges bzw. der jeweiligen Strahlenbündel gleichzeitig mit der Fokussierung des visuellen Strahlengangs auf das entfernte Objekt auch das Messstrahlenbündel und das zurück reflektierte Strahlenbündel des Messstrahls für unterschiedliche Entfernungen simultan fokussiert werden kann. Dies führt zu einer besseren Ausnützung der Laserleistung und zu einem deutlicheren Messsignal, wodurch die Auswertegenauigkeit und somit die Genauigkeit des Messergebnisses der Entfernung in überraschend einfacher Weise deutlich gesteigert werden kann.

Eigenständig wird die Aufgabe der Erfindung auch durch eine Fernoptische Einrichtung mit einem visuellen Strahlengang und mit einem Laser-Entfernungsmesser mit einem Lasersender, einem Laserempfänger und mit einem opto-elektronischen Anzeigeelement gelöst. Dabei verläuft ein Teil eines Strahlengangs des Lasersenders und ein Teil eines Strahlengangs des Laserempfängers in dem visuellen Strahlengang, wobei Bereiche der Umlenkung an optischen Bauelementen lokalisiert sind, wobei die Bereiche der Umlenkung an einem einzigen optischen Bauelement lokalisiert sind.

Vorteilhaft ist bei dieser Lösung, dass durch die Zusammenführung der Einblendung des Messstrahls in den visuellen Strahlengang und des Abzweigens vom entfernten Objekt, des rückreflektierten Messstrahls in einem optischen Element und gegebenenfalls des Einblendens von Anzeigen hervorragende optische Eigenschaften für den visuellen Strahlengang, erreicht werden können.

Eigenständig wird die Aufgabe der Erfindung aber auch durch eine Fernoptische Einrichtung mit einem visuellen Strahlengang mit einem Umkehrsystem und mit einem Laser-Entfernungsmesser mit einem Lasersender und einem Laserempfänger und mit einem opto-elektronischen Anzeigeelement, wobei ein Teil eines Strahlengangs des Lasersenders und ein Teil eines Strahlengangs des Laserempfängers in dem visuellen Strahlengang verlaufen, und wobei Bereiche der Umlenkung an optischen Bauelementen lokalisiert sind, die Bestandteile des Umkehrsystems bilden.

Vorteilhaft ist durch die Integration der optischen Bauelemente zum Einblenden des Messstrahls und zum Ausblenden des rücklaufenden Messstrahls des vom Objekt reflektierten Messstrahls unter Verwendung der Mittel der optischen Elemente, die für das Umkehrsystem benötigt werden, eine zusätzliche Vereinfachung des optischen Systems möglich und kann die Anzahl der optischen Elemente noch zusätzlich verringert werden. Zudem kann trotz dem Ein- und Ausblenden dieser zusätzlichen Strahlengänge eine hohe optische Qualität des visuellen Strahlengangs beibehalten werden.

Weiters wird die Aufgabe der Erfindung auch durch ein binokulares Beobachtungsgerät, insbesondere Fernglas, mit zwei visuellen Strahlengängen und mit einem Laser-Entfemungsmesser mit einem Lasersender und einem Laserempfänger und mit einem opto-elektronischen Anzeigeelement, wobei ein Teil eines Strahlengangs des Lasersenders oder des Laserempfängers in einen ersten visuellen Strahlengang integriert ist, und wobei der Strahlengang des Laserempfängers oder des Lasersenders als ein dritter Strahlengang angeordnet ist gelöst. Dabei ist vorgesehen, dass der dritte Strahlengang eine Sender-Fokussiereinrichtung umfasst, die mit einer Fokussiereinrichtung der beiden visuellen Strahlengänge zur Fokussierung auf ein entferntes Objekt zusammenwirkend gekoppelt ist.

Vorteilhaft ist hierbei, dass auch bei Verwendung eines getrennt von den visuellen Strahlengängen angeordneten Empfängers oder Senders für den Messstrahl bzw. für den vom zu beobachtenden Objekt reflektierten Messstrahls eine Fokussierung beider Strahlengänge des Entfernungsmesssystems erzielt werden kann, die mit der Fokussierung des visuellen Strahlengangs für das entfernte Objekt synchronisiert ist.

Schließlich wird die Aufgabe der Erfindung eigenständig auch durch ein Verfahren zur Beobachtung und Messung der Entfernung eines entfernten Objekts mit einer fernoptischen Einrichtung mit einem visuellen Strahlengang und mit einem Laser-Entfernungsmesser mit einem Lasersender und einem Laserempfänger gelöst, wobei folgende Verfahrensschritte durchgeführt werden
a) das Objekt mittels des visuellen Strahlengangs anvisiert wird
b) durch Aussenden eines Laserimpulses von dem Lasersender der Messvorgang ausgelöst wird und eine Laufzeit ermittelt wird,
c) durch eine Steuer- und Auswerteeinrichtung ein Wert der Entfernung zum entfernten Objekts berechnet und angezeigt wird und
d) basierend auf dem Wert der Entfernung eine Scharfstellung durch Verstellung einer Fokussiereinrichtung durchgeführt wird.

Zum besseren Verständnis der Erfindung wird diese anhand der nachfolgenden Figuren näher erläutert.

Es zeigen jeweils in stark schematisch vereinfachter Darstellung:
- Fig. 1: ein Optikschema eines Fernglases mit einem integrierten Entfernungsmesser;
- Fig. 2: einen vergrößerten Ausschnitt des ersten Beobachtungsteiles gemäß Figur 1;
- Fig. 3: einen Schnitt durch das Sendeoptiksystem bzw. das Empfangsoptiksystem gemäß Figur 1;
- Fig. 4: ein Bild des durch das Okular beobachtbaren Gesichtsfeldes;
- Fig. 5: ein Bild des durch das Okular beobachtbaren Gesichtsfeldes mit mehreren Messbereichen;
- Fig. 6: ein weiteres Ausführungsbeispiel eines binokularen Beobachtungsgerätes;
- Fig. 7: ein weiteres Ausführungsbeispiel eines Beobachtungsgerätes mit einem dritten Strahlengang;

- Fig. 8: eine Seitenansicht des Beobachtungsgerätes gemäß Figur 1;
- Fig. 9: ein Beobachtungsgerät 1 mit einer alternativen Ausführungsform der Augenweiteneinstellung;
- Fig. 10: ein weiteres Ausführungsbeispiel eines modular aufgebauten Beobachtungsgeräts gemäß Fig. 9.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

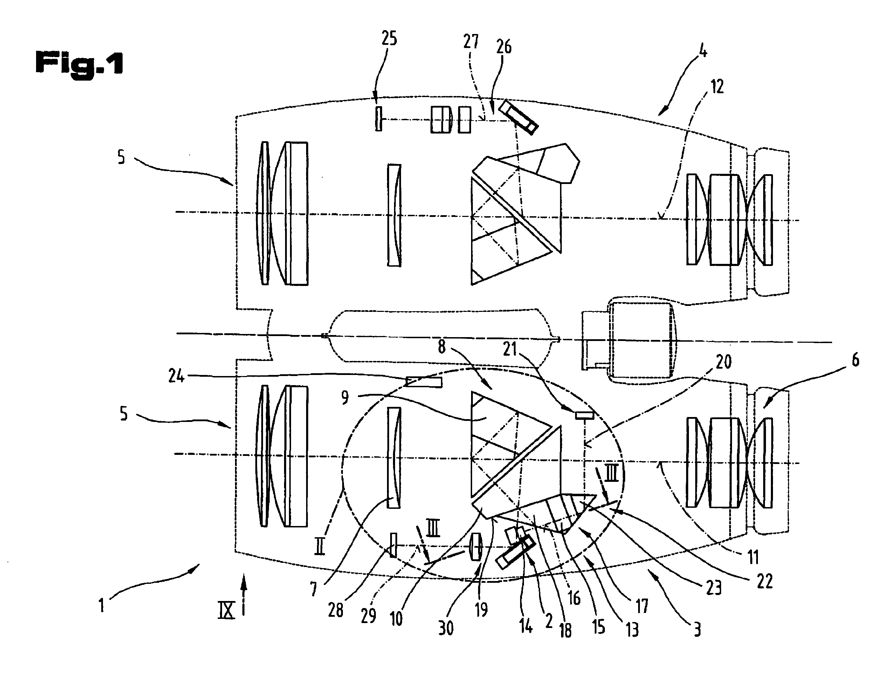

Die Fig. 1 zeigt ein Optikschema eines Beobachtungsgeräts 1, insbesondere eines Fernglases mit einem integrierten Laser-Entfernungsmesser 2.

Das Beobachtungsgerät 1 umfasst einen ersten Beobachtungsteil 3 und einen zweiten Beobachtungsteil 4, die jeweils für sich genommen eine fernoptische Einrichtung bilden. Hinsichtlich ihrer optischen Bauelemente sind die beiden Beobachtungsteile 3, 4 gleichartig aufgebaut und umfassen zunächst ein Objektiv 5 und ein Okular 6 zur vergrößerten Darstellung eines beobachteten Objekts. Gemäß diesem Ausführungsbeispiel erfolgt die Scharfstellung durch eine Fokussiereinrichtung 7, die vorzugsweise durch eine Linse gebildet wird. Zur Aufrichtung und seitenrichtigen Darstellung des beobachteten Objekts ist zwischen der Fokussiereinrichtung 7 und dem Okular 6 ein Umkehrsystem 8 angeordnet. Gemäß diesem Ausführungbeispiel wird das Umkehrsystem 8 durch ein Prismensystem, dass ein Dachkantprisma 9 und ein Umlenkprisma 10 umfasst, gebildet. Durch die genannten optischen Bauelemente sind somit ein erster visueller Strahlengang 11 des ersten Beobachtungsteils 3 und ein zweiter visueller Strahlengang 12 des zweiten Beobachtungsteils 4 bestimmt. Zur besseren Übersichtlichkeit sind die Strahlengänge 11 und 12 jeweils nur durch die entsprechenden Hauptstrahlen bzw. die entsprechenden optischen Achsen der Beobachtungsteile 3 und 4 symbolisiert und vereinfacht dargestellt.

Grundsätzlich ist hierbei festzuhalten, dass in der gesamten Beschreibung, wenn von Strahlengängen gesprochen wird, jeweils ein Bündel von Strahlen, also ein so genanntes homozentrisches Strahlenbündel, zu verstehen ist.

Für die Entfernungsmessung umfasst der erste Beobachtungsteil 3 auch ein Sendeoptiksystem 13 mit einem Lasersender 14 und einer Senderoptik 15. Der Lasersender 14 ist derart in den ersten Beobachtungsteil 3 integriert, dass ein Teil eines Strahlengangs 16 des Lasersenders 14 in den ersten visuellen Strahlengang 11 umgelenkt ist. Zur Umlenkung des Strahlengangs 16 des Lasersenders 14 sind in dem ersten Beobachtungsteil 3 optische Bauelemente vorgesehen, die gemäß diesem Ausführungsbeispiel durch ein Umlenkprisma 17 und ein Teilerprisma 18 gebildet sind. Das Teilerprisma 18 ist dazu an der dem Dachkantenprisma 9 gegenüberliegenden Fläche 19 des Umlenkprismas 10 angeordnet bzw. an der Fläche 19 des Dachkantenprismas 10 mit diesem verbunden. Die Fläche 19 bildet einen Strahlenteiler, indem an dieser eine teildurchlässige Beschichtung vorgesehen ist. Durch diese Beschichtung der Fläche 19 erfolgt an dieser eine Reflexion des visuellen Strahlengangs 11, wohingegen das Licht des Lasersenders 14 nicht reflektiert wird und ungehindert durch die Fläche 19 hindurch tritt. Die Vereinigung des optischen Strahlengangs 16 des Lasersenders 14 mit dem ersten visuellen Strahlengang 11 ist somit an der Fläche 19 des Umlenkprismas 10 bzw. des Teilerprismas 18 lokalisiert. Dazu ist vorgesehen, dass die Richtung des Strahlengangs 16 des Lasersenders und die Richtung des ersten visuellen Strahlengangs 11 in seinem objektivseitigen Verlauf im Bereich bzw. im Inneren des Umlenkprismas 10 gleich gerichtet sind. Indem der Strahlengang 16 des Lasersenders 14 in seinem Verlauf auf das Objekt hin auch die Fokussiereinrichtung 7 und das Objektiv 5 passiert, kann der Lasersender 14 bzw. der Strahlengang 16 des Lasersenders auf dem Objekt bzw. in der Objektebene fokussiert werden.

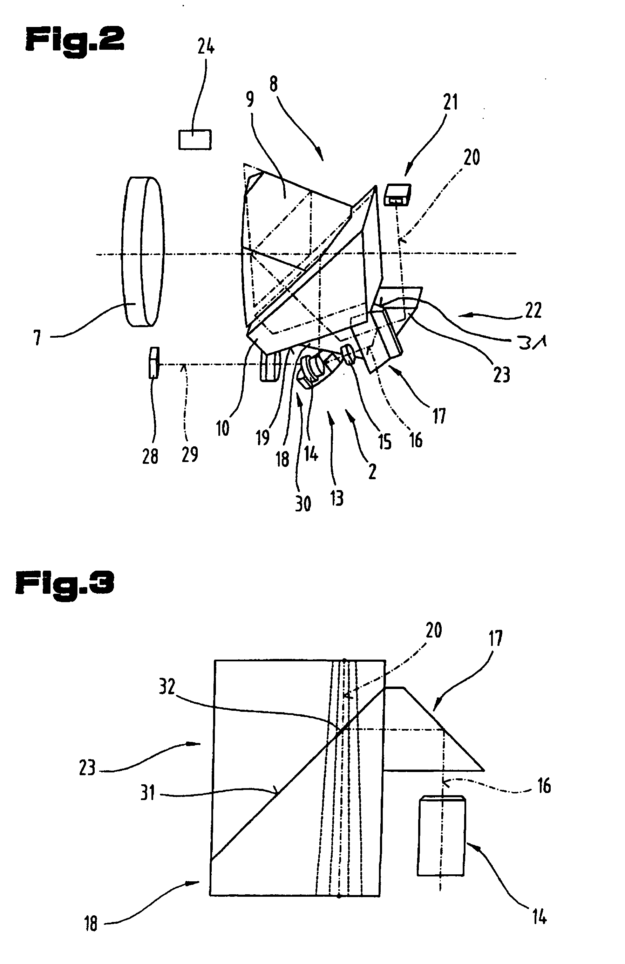

Hinsichtlich des in der Fläche 19 vorgesehenen Strahlenteilers sind unterschiedliche Ausführungsvarianten möglich. Im Falle der Verwendung einer wellenlängenspezifisch teildurchlässigen Beschichtung muss diese auf die Wellenlänge des Laserlichts des verwendeten Lasersenders 14 abgestimmt sein. Dabei weist die Beschichtung eine wellenlängenabhängige Transmissionscharakteristik auf, die nur in einem sehr engen Wellenlängenbereich einem sehr hohen Wert des Transmissionskoeffizienten zeigt, wobei dieser enge Wellenlängenbereich der Wellenlänge der verwendeten Laserstrahlung des Lasersenders 14 entspricht. Dabei kann die verwendete Laserstrahlung sowohl im sichtbaren Wellenlängenbereich, als auch in einem nicht sichtbaren Wellenlängenbereich liegen. Eine Verwendung eines im infraroten Bereich sendenden Lasersenders 14 ist jedoch vorzuziehen, da dadurch eine Beeinträchtigung der visuellen Beobachtung vermieden wird. So könnte beispielsweise die Adaption des Auges des Beobachters in der Dämmerung durch Streulicht von dem Lasersender 14 gestört werden. Um eine Strahlenteilung zu bewirken, könnte alternativ auch die Polarisation des verwendeten Laserlichts zur Selektion heran gezogen werden. Eine weitere alternative Möglichkeit für einen Strahlenteiler besteht in einer räumlichen Aufteilung, indem beispielsweise nur für einen Teilbereich des Raumwinkels eines Strahlengangs bzw. eines Strahlenbündels ein metallischer Spiegel verwendet wird, wie es auch nachfolgend anhand der Beschreibung der Fig. 3 ausgeführt wird.

Nach der Reflexion des Laserlichts an einem entfernten Objekt treten reflektierte Laserstrahlen gemeinsam durch den ersten visuellen Strahlengang 11 wieder in das Beobachtungsgerät 1 ein. Bedingt durch die teildurchlässige Beschichtung der Fläche 19 zwischen dem Umkehrprisma 10 und dem Teilerprisma 18 erfolgt an dieser Fläche 19 eine Trennung eines Strahlengangs 20 des Laserempfängers von dem ersten visuellen Strahlengang 11. Zur Detektion bzw. Messung der reflektierten Laserstrahlung ist ein Empfänger 21 vorgesehen, wobei das Laserlicht dazu durch ein Empfangsoptiksystem 22 geführt ist, welches gemäß diesem Ausfiihrungsbeispiel durch das Teilerprisma 18 und ein Empfängerprisma 23 gebildet ist. Indem der erste visuelle Strahlengang 11 und der Strahlengang 20 des Laserempfängers an der Fläche 19 zwischen dem Umkehrprisma 10 und dem Teilerprisma 18 vereinigt bzw. aufgespalten sind, ist somit auch ein Teil des Strahlengangs 20 des Laserempfängers in den ersten visuellen Strahlengang 11 integriert. Somit sind bei diesem Beobachtungsgerät 1 mit einem Laser-Entfernungsmesser 2 zur Integration des Strahlengangs 16 des Lasersenders 14 und des Strahlengangs 20 des Laserempfängers 21 in den ersten visuellen Strahlengang 11 optische Bauelemente angeordnet, in denen ein Übergang zwischen dem ersten visuellen Strahlengang 11 und dem Strahlengang 16 des Lasersenders 14 bzw. dem Strahlengang 20 des Laserempfängers 21 erfolgt. Gemäß dem beschriebenen Ausführungsbeispiel ist darüber hinaus der Bereich des Übergangs an einem einzigen optischen Bauelement und zwar der Fläche 19 des Umlenkprismas 10 lokalisiert. Es erfolgt somit die Einleitung der Laserstrahlung des Lasersenders 14, als auch die Abtrennung der reflektierten Laserstrahlung von dem ersten visuellen Strahlengang 11 an der einzigen Fläche 19.

Erfindungsgemäß ist somit der Bereich des Übergangs, d.h. der Vereinigung bzw. der Aufspaltung der Strahlengänge 16, 20 des Lasersenders 14 bzw. des Laserempfängers 21 einerseits und des visuellen Strahlengans 11 andererseits zwischen den beobachterseitigen Brennpunkt des Objektivs 5 und der Fokussiereinrichtung 7 bzw. dem Objektiv 5 angeordnet. Für die Abbildung zwischen dem entfernten Objekt einerseits und dem beobachterseitig erzeugten Bild des Objekts andererseits, als auch für die Abbildung des Lasersenders 14 und des Laserempfängers 21 auf das entfernte Objekt hin, ist somit dieselbe Anordnung der optischen Bauelemente des Objektivs 5 und der Fokussiereinrichtung 7 bestimmend. Diese räumliche Anordnung der genannten optischen Bauelemente zueinander hat den besonderen Vorteil, dass nur durch eine Veränderung der Einstellung eines einzigen optischen Bauelements, nämlich der Fokussiereinrichtung 7, sowohl eine Fokussierung des ersten visuellen Strahlengangs 11, als auch des Strahlengangs 16 des Lasersenders 14 und des Strahlengans 20 des Laserempfängers 21 vorgenommen werden kann. Damit wird erreicht, dass für jede Entfernungseinstellung die von dem entfernten Objekt zurück geworfene Strahlung mit hoher Effizienz für die Entfernungsmessung genützt werden kann.

Die Entfernungsmessung erfolgt in der an sich bekannten Weise, basierend auf dem Prinzip der Laufzeitmessung eines Laserimpulses bzw. einer Laserimpulsfolge die vom Lasersender 14 ausgesendet und von einem Objekt zurückgeworfen wird. Aus dem Verhältnis der Zeitdifferenz zwischen den Aussenden eines Laserimpulses und dem Eintreffen des reflektierten Laserlichts bezogen auf die Lichtgeschwindigkeit ergibt sich sodann die Entfernung des anvisierten Objektes. Der Eintreffzeitpunkt des reflektierten Lasersignals wird durch den Empfänger 21 detektiert. Zur Berechnung und Steuerung der Funktionen des Beobachtungsgerätes 1 ist eine Steuer- und Auswerteeinheit 24 vorgesehen. Der in der Steuereinheit 24 schließlich errechnete Wert der Entfernung kann für den Beobachter im Gesichtsfeld dargestellt werden, indem in einem der beiden Beobachtungsteile 3, 4 ein Anzeigeelement 25 mit einer entsprechenden Anzeigeoptik 26 vorgesehen ist. Die Anzeigeoptik 26 ist gemäß diesem Ausführungsbeispiel in dem zweiten Beobachtungsteil 4 derart angeordnet, dass der Strahlengang 27 der Anzeigeoptik 26 in dem okularseitigen Teil des zweiten visuellen Strahlengangs 12 integriert ist. Der Bereich des Übergangs des Strahlengangs 27 der Anzeigeoptik 26 in den zweiten visuellen Strahlengang 12 ist wie bereits für das Umkehrsystem 8 des ersten Beobachtungsteil 3 beschrieben an einer teilreflektierenden Oberfläche eines Prismas lokalisiert.

Selbstverständlich ist es auch möglich, den errechneten Wert der Entfernung bzw. die Zielmarke 28 in beiden oder wahlweise in nur einem der beiden Beobachtungsteile 3, 4 anzuzeigen. Zusätzlich ist es in vorteilhafter Weise auch möglich, außen am Beobachtungsgerät 1 ein Display vorzusehen, auf dem die gemessene Entfernung kontinuierlich oder intermittierend bzw. auf Aufforderung durch den Bediener angezeigt werden kann.

Zudem ist eine Übertragung über Fernübertragungsmittel, insbesondere über drahtlose Fernübertragungsmittel, beispielsweise Funk oder Infrarot, der festgestellten Entfernung und sonstiger Daten, wie beispielsweise die gewählte Fokussierung und/oder ein Vergrößerungsfaktor und/oder Helligkeits- bzw. Temperaturwerte, in unterschiedliche Teile des Beobachtungsgerätes 1 oder gesonderte Anzeige- und/oder Auswertevorrichtungen möglich. Es ist aber auch zweckmäßig, diese im Beobachtungsgerät 1 abzuspeichern oder für verschiedene Auswertungen miteinander zu verknüpfen und abzuspeichern sowie auf Aufforderung, beispielsweise auf, einem auf der Außenseite des Beobachtungsgerätes 1 angebrachten Anzeigegerät darzustellen.

Zudem ist eine Übertragung von zumindest einem Teil des vom entfernten Objekt reflektierten Messsignals, insbesondere über optische und/oder opto-elektronische Elemente von einem der beiden Beobachtungsteil 3, 4 in den jeweils anderen Beobachtungsteil 4, 3 möglich. Dazu können Lichtleiter, Prismen und/oder Linsen und/oder Spiegel verwendet werden.

Diese können zumindest in einem zwischen den beiden Beobachtungsteilen angeordneten Verbindungselement, zum Beispiel einer Gelenkbrücke, einem Steg, oder einer teleskopierbaren Brücke angeordnet sein.

In gleicher Art und Weise können auch optische und/oder opto-elektronische Signale des Anzeigeelementes 25 bzw. der Zielmarke 28 zwischen den beiden Beobachtungsteilen 3, 4 ausgetauscht werden. Die Übertragung von Signalen und/oder Daten zwischen den beiden Beobachtungsteilen 3, 4 bzw. der Steuer- und Auswerteeinheit 24, dem Lasersender 14, dem Empfänger 21, dem Anzeigeelement 25 und der Zielmarke 28 kann über elektrische, optische und/oder optoelektronische und/oder elektromagnetische Übertragungselemente erfolgen. Diese können zumindest in einem zwischen den beiden Beobachtungsteilen angeordneten Verbindungselement, zum Beispiel einer Gelenkbrücke, einem Steg, oder einer teleskopierbaren Brücke verlaufen.

Darüber hinaus ist es möglich, mit diesen Übertragungsmitteln diese Daten auf ein externes Anzeigeelement, welches in vorteilhafter Weise auch unabhängig vom Beobachtungsgerät 1 ausgebildet bzw. angeordnet sein kann, zu übertragen. Zweckmäßig ist vor allem eine Übertragung dieser Daten auf ein Zielfernrohr einer Waffe oder sonstige Systeme zur Überwachung bzw. zur Steuerung von Vorrichtungen, die derartige Entfernungsangaben benötigen. Zur Erleichterung des Anvisierens eines zu beobachtenden Objektes zu welchem die Entfernung gemessen werden soll, ist in dem ersten Beobachtungsteil 3 darüber hinaus eine Zielmarke 28 vorgesehen. Die Zielmarke 28 bzw. ein Strahlengang 29 der Zielmarke 28 wird über eine dazu vorgesehene Zielmarkenoptik 30 in dem okularseitigen Teil des ersten visuellen Strahlenganges 11 überführt. Der Bereich des Übergangs des Strahlengangs 29 der Zielmarke 28 ist dabei ebenfalls an der zwischen dem Umlenkprisma 10 und dem Teilerprisma 18 liegenden Fläche 19 lokalisiert.

Gemäß einer alternativen Ausführungsform ist es auch möglich, neben dem Strahlengang 29 der Zielmarke 28 auch den Strahlengang 27 des Anzeigeelements 25 in dem ersten Beobachtungsteil 3 des Beobachtungsgeräts 1 zu integrieren. Dabei wäre es aber zusätzlich auch von Vorteil, das Anzeigeelement 25 selbst zur Erzeugung der Zielmarke 28 zu verwenden. Für das Anzeigeelement 25 wird bevorzugt ein opto-elektronisches Anzeigeelement verwendet, dass eine individuelle Ansteuerung einzelner Bild erzeugender Pixel erlaubt. Damit kann auf einfache Weise eine Kalibrierung der Zielmarke 28 vorgenommen werden. Die Verwendung des opto-elektronischen Anzeigeelements 25 erlaubt darüber hinaus auch, dass die Form der Zielmarke 28 frei gewählt werden kann. So ist es beispielsweise möglich, dass der Beobachter über eine geeignete Eingabeeinrichtung die Geräteelektronik dazu veranlasst, als Zielmarke eine gewünschte Zielmarke 28 aus einem entsprechenden Speicher softwaremäßig zu wählen und zur Anzeige zu bringen. Die gleichzeitige Verwendung des Anzeigeelementes 25, auch zur Erzeugung der Zielmarke 28, hat insbesondere den Vorteil einer Reduktion der Zahl der erforderlichen Bauteile zur Herstellung des Beobachtungsgerätes 1.

Die Zielmarke 28 kann über ein optisches Element und eine Lichtquelle, beispielsweise eine entsprechend gestaltete Blende, hergestellt und in den visuellen Strahlengang der Beobachtungsteile 3, 4 eingeblendet werden.

Die Anzeigevorrichtung, als auch die Vorrichtung zur Darstellung der Zielmarke kann durch entsprechende opto-elektronische Bauelemente, insbesondere LED-, LCD-Displays oder ähnliches, gebildet sein.

In einer anderen Ausführungsvariante sind in dem ersten Beobachtungsteil 3 der Lasersender 14 und der Empfänger 21 mit deren Strahlengängen 16, 20 angeordnet, wogegen das Anzeigeelement 25 und die Zielmarke 28 mit deren Strahlengängen 27, 29 in dem zweiten Beobachtungsteil 4 integriert sind. So wie vorstehend ausgeführt kann dabei auch vorgesehen sein, dass das Anzeigeelement 25 und die Zielmarke 28 durch ein gemeinsames Anzeigeelement 25 gebildet sind.

In der Fig. 2 ist ein Ausschnitt des ersten Beobachtungsteils 3 gemäß Fig. 1 perspektivisch und vergrößert dargestellt. Beginnend beim Lasersender 14 ist das Laserlicht über den Strahlengang 16 des Lasersenders 14 über die Sendeoptik 15, das Umlenkprisma 17 und das Teilerprisma 18 an der Fläche 19 in den objektivseitigen Teil des ersten visuellen Strahlenganges 11 geführt. Zu dem Empfänger 21 hin sind die reflektierten Laserstrahlen an der Fläche 19 aus dem Umlenkprisma 10 des Umkehrsystems 8 herausgefiihrt und gelangen über das Teilerprisma 18 in das Empfängerprisma 23, wo sie schließlich zum Empfänger 21 umgeleitet werden. Der Strahlengang 29 der Zielmarke 28 führt von der Zielmarke 28 über die Zielmarkenoptik 30 durch das Teilerprisma 18 hindurch in das Umlenkprisma 10 in der Weise bzw. mit einer Ausrichtung, sodass der Strahlengang 29 der Zielmarke 28 in dem okularseitigen Teil des ersten visuellen Strahlengangs 11 überführt wird.

Zwischen dem Teilerprisma 18 und dem Empfängerprisma 23 ist ein Strahlenteiler 31 ausgebildet, der eine Aufspaltung zwischen dem Strahlengang 16 des Lasersenders 14 und dem Strahlengang 20 des Laserempfängers 21 bewirkt, was durch Fig. 3 besser verdeutlicht wird.

Die Fig. 3 zeigt einen Schnitt durch das Sendeoptiksystem 13 bzw. das Empfangsoptiksystem 22 gemäß Fig. 1. Darin ist der unterschiedliche Verlauf des Strahlengangs 16 des Lasersenders 14 und des Strahlengangs 20 des Laserempfängers 21, der an dem Strahlenteiler 31 aufgespalten wird, dargestellt. Gemäß diesem Ausführungsbeispiel wird der Strahlenteiler 31 durch einen im Grenzbereich zwischen dem Teilerprisma 18 und dem Empfängerprisma 23 angeordneten Spiegel 32 gebildet. Der Spiegel 32 erstreckt sich nur über einen Teilbereich der Durchtrittsfläche des Strahlengangs 20 des Laserempfängers 21 durch den Strahlenteiler 31 bzw. durch die Grenzfläche zwischen dem Teilerprisma 18 und dem Empfängerprisma 23. An dem Strahlenteiler 31 findet somit eine Aufspaltung zwischen den beiden Strahlengängen 16 und 20 entsprechend unterschiedlicher Raumwinkelbereiche der den Strahlengängen 16 und 20 entsprechenden und den Strahlenteiler 31 passierenden Strahlenbündel statt. In einer bevorzugten Ausführungsform ist der Spiegel 32 in Form einer Ellipsenfläche ausgeführt. Das von dem Lasersender 14 ausgehende Laserlicht weist einen geringen Öffnungswinkel im Verhältnis zu dem von dem Objekt reflektierten Laserlichtstrahlenbündel auf. An dem Spiegel 32 findet somit eine nur geringfügige Abschattung, des von dem entfernten Objekt reflektierten Laserlichts, statt.

Erfindungsgemäß ist vorgesehen, dass das Empfängerprisma 23 und das Umlenkprisma 17 an dem Teilerprisma 18, beispielsweise durch Verkitten, befestigt sind. Andererseits ist das Teilerprisma 18 mit dem Umlenkprisma 10 des Umkehrsystems 8 des visuellen Strahlenganges 11 fest verbunden. Das Teilerprisma 18, das Umlenkprisma 17, das Empfängerprisma 23 und das Umlenkprisma 10 bilden somit eine monolithisch fest verbundene Baueinheit. Vorteilhaft ist dabei, dass für den Einbau des Prismensystems in den Beobachtungsteil 3 nur eine entsprechend geringere Anzahl verschiedener Halterungen vorgesehen werden braucht. Auch ist der Aufwand zur Justierung der räumlichen Lage der entsprechenden Prismen zueinander wesentlich verringert. Somit sind auch Funktionsstörungen durch eine fehlerhafte Dejustierung wesentlich weniger wahrscheinlich.

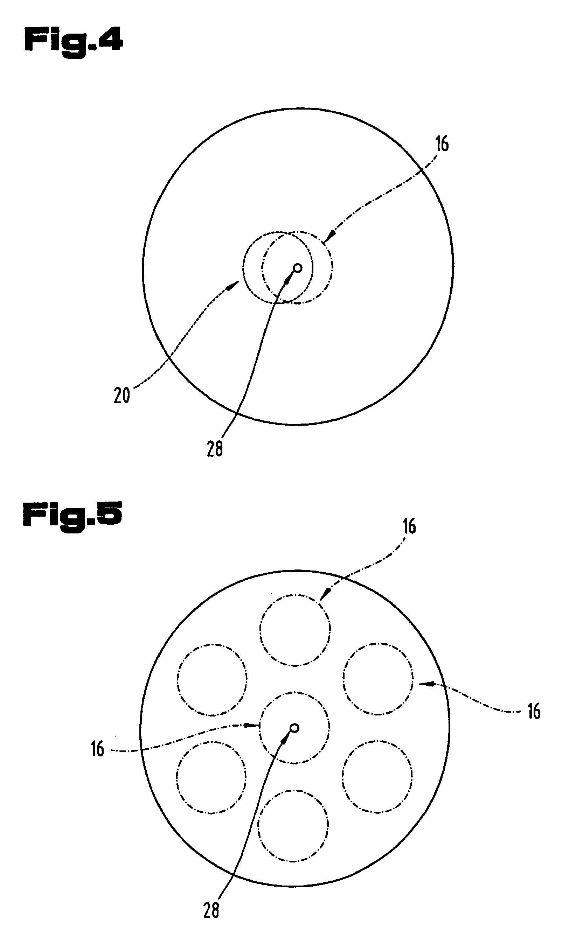

Die Fig. 4 zeigt ein Bild des durch das Okular 6 beobachtbaren Gesichtsfelds mit dem Bild der Zielmarke 28. Weiters ist mit strichpunktierten Linien der Bereich des Strahlengangs 16 des Lasersender 14 angedeutet. Daneben ist in strichlierten Linien der Strahlengang 20 des Empfängers 21 dargestellt. Die Darstellung gemäß der Fig. 4 entspricht einerseits dem Bereich in der Objektebene, der von dem Lasersender 14 bzw. den Strahlengang 16 des Lasersenders 14 am Objekt ausgeleuchtet wird. Es ist dies gleichzeitig ein in die Objektebene fokussiertes Bild des Lasersenders 14. Andererseits entspricht der strichliert angedeutete Bereich des Strahlengangs 20 des Empfängers 21 einem in die Objektebene fokussierten Bild des Empfängers 21. Es steht somit für den Empfänger 21 für die Detektion von reflektiertem Laserlicht nur der in dem Überschneidungsbereich befindliche Teil des Strahlengangs 20 des Empfängers 21 zur Verfügung. Durch eine entsprechende Justierung des Empfangsoptiksystems 22 kann erreicht werden, dass die in Fig. 4 angedeuteten Bereiche des Strahlengangs 20 des Empfängers 21 mit dem Bereich des Strahlengangs 16 des Lasersenders 14 zentriert ausgerichtet wird. Vorzugsweise werden diese beiden Bereiche zur Deckung gebracht, sodass das Maximum der reflektierten Laserstrahlung auf den Empfänger 21 trifft. Es sei dabei hinzugefügt, dass die angedeuteten Bereiche 16, 20 im Allgemeinen für das menschliche Auge nicht sichtbar sind, da das verwendete Laserlicht üblicherweise in einem außerhalb des sichtbaren Bereichs liegenden Frequenzbereich gewählt wird. So werden beispielsweise Infrarot-Laserdioden als Lasersender 14 eingesetzt.

Bei einer Ausführungsvariante, bei der der Strahlengang 16 des Lasersenders 14 in einen der beiden visuellen Strahlengänge 11 oder 12 in einem der Beobachtungsteile 3, 4 angeordnet ist und der Strahlengang 20 des Empfängers 21 in dem anderen der beiden visuellen Strahlengänge 12 oder 11 angeordnet ist, ist eine Einstellvorrichtung vorgesehen, mit der der Verlauf der Strahlengänge 16 und 20 soweit verlagert werden kann, dass sie sich am entfernten Objekt in einem möglichst hohen Ausmaß überdecken. Dadurch kann auch bei einem Beobachtungsgerät 1, bei dem, wie in Fig. 1 angedeutet, die beiden Beobachtungsteile 3, 4 um eine zentrale Gelenkachse relativ zueinander verschwenkbar sind, eine einwandfreie Entfernungsmessung sichergestellt werden. Alternativ ist es aber auch möglich, den Strahlengang 20 des Empfängers 21 mit einem größerem Öffnungswinkel als dem des Strahlengangs 16 des Lasersenders 14 auszubilden, sodass auch bei räumlichen Lageabweichungen der beiden visuellen Strahlengänge 11 oder 12 auch bei unterschiedlichen Einstellungen des Augenabstandes ein möglichst großer Anteil der vom Lasersender 14 ausgesandten Strahlung von dem Empfänger 21 erfasst wird. Bei einer entsprechenden Vergrößerung des Öffnungswinkels des Strahlengangs 20 des Empfängers 21 kann auch bei einer Relativbewegung der Strahlengänge 16, 20, verursacht durch eine räumliche Verlagerung der beiden Beobachtungsteile 3, 4 um eine zentrale Gelenkachse relativ zueinander zur Einstellung des Augenabstandes, berücksichtigt werden, sodass trotzdem ein möglichst großer Anteil der vom Lasersender 14 ausgesandten Strahlung von dem Empfänger erfasst wird. Die genannten Abweichungen können beispielsweise durch eine nicht parallele Ausrichtung der beiden visuellen Strahlengänge 11, 12 relativ zu der Ausrichtung der Gelenkachse verursacht sein. Zudem kann die Einstellvorrichtung über die Steuer- und Auswerteeinheit angesteuert sein. Bevorzugt ist eine selbsttätige Nachjustierung an Hand von zuvor definierten Messgrößen insbesondere in einem geschlossenen Regelkreis möglich.

Die Ausführungsvariante, bei der in einem der beiden Beobachtungsteile 3, 4 der Lasersender 14 mit seinem Strahlengang 16 und in dem anderen Beobachtungsteil 4, 3 der Empfänger 21 mit seinem Strahlengang 20 angeordnet ist, hat den Vorteil, dass jeweils der gesamte Bereich bzw. Öffnungswinkel der beiden visuellen Strahlengänge 11, 12 uneingeschränkt für die Nutzung der Laserenergie für die Entfernungsmessung zur Verfügung steht und somit eine hohe Effizienz der Laser-Entfernungsmessung erzielbar ist. Bei den vorstehend genannten Ausführungsvarianten kann das Anzeigeelement 25 und/oder die Zielmarke 28 in einem der beiden Beobachtungsteile 3, 4 oder auch getrennt in jeweils einem der Beobachtungsteile 3 oder 4 oder auch in beiden Beobachtungsteilen 3, 4, bevorzugt individuell aktivierbar, angeordnet sein. Dabei wäre es aber zusätzlich auch von Vorteil, das Anzeigeelement 25 selbst zur Erzeugung der Zielmarke 28 zu verwenden.

Da entsprechende Sicherheitsbestimmungen für visuelle Beobachtungsgeräte 1 nur einen begrenzten maximalen Wert der Strahlungsleistung, die bei der Beobachtung in das menschliche Auge treffen darf, vorsieht, wird bei dem erfindungsgemäßen Beobachtungsgerät 1 auch eine Anpassung bzw. Optimierung der Laserleistung je nach der gemessenen Entfernung des beobachteten Objektes vorgenommen. Dies ist möglich, da das Bild des Lasersenders 14 ebenfalls auf das entfernte Objekt hin fokussiert wird.

Gemäß einem bevorzugten Verfahren zur Beobachtung und Messung der Entfernung eines entfernten Objekts wird das Beobachtungsgerät 1 zunächst auf das Objekt gerichtet und dieses damit anvisiert. Das Anvisieren des Objekts wird durch einblenden der Zielmarke 28 unterstützt. Das Einblenden der Zielmarke 28 kann bspw. durch Betätigung eines Schalters ausgelöst werden und wird vorzugsweise nach Einleitung des durch die Steuer- und Auswerteeinheit 24 durchgeführten Messvorgangs selbsttätig beendet. Während das Beobachtungsgerät 1 auf das Objekt anvisiert gehalten wird, erfolgt der vorzugsweise manuell ausgelöste Messvorgang. Aus den während des Messvorgangs durchgeführten Laufzeitmessungen der Laserimpulse wird anschließend durch die Steuer- und Auswerteeinheit 24 ein Wert der Entfernung des entfernten Objekts berechnet, worauf dieser mit Hilfe des Anzeigeelementes 25 in dem Gesichtsfeld des zweiten Beobachtungsteiles 4 angezeigt wird.

Gemäß einer weiteren Ausführungsvariante des Verfahrens erfolgt, basierend auf dem zunächst berechneten Wert der Entfernung, eine Scharfstellung durch Verstellen der Fokussiereinrichtung 7. Vorzugsweise erfolgt diese Verstellung automatisch, indem durch die Steuer- und Auswerteeinheit 24, bspw. ein Verstellmotor, zur Verschiebung einer als Fokussiereinrichtung 24 verwendeten Fokussierlinse betätigt wird.

Die Scharfstellung der visuellen Strahlengänge 11, 12 kann alternativ auch auf halbautomatische Weise durchgeführt werden. Die Scharfstellung kann dabei auch noch beschleunigt werden, indem zunächst eine Grobeinstellung durchgeführt wird. Dazu könnte vorgesehen sein, dass durch einen Sensor der aktuelle Wert der Einstellung der Fokussiereinrichtungen 7 bestimmt wird und der diesem Wert entsprechende Entfernungswert gemeinsam mit dem aus der Laserentfernungsmessung bestimmten Wert der Entfernung durch das Anzeigeelement 25 angezeigt wird. Der Benützer des Beobachtungsgeräts 1 hat somit die Möglichkeit durch Verstellen der Fokussiereinrichtung 7 die visuellen Strahlengänge 11, 12 so lange zu verändern, bis der der Fokussiereinrichtung 7 entsprechende Entfernungswert dem vom Laserentfernungsmesser gemessenen und angezeigten Wert gleicht.

Für die halbautomatische Nachstellung der Fokussiereinrichtung 7, sowohl für den visuellen Strahlengang, als auch für den Strahlengang des Messsignals bzw. des reflektierten Messsignals bzw. den Strahlengang 16 des Senders 14 bzw. des Strahlengangs 20 des Empfängers 21, kann über eine eigene Anzeigevorrichtung, die auch durch die Anzeigevorrichtung 25 für den Entfernungsmesser gebildet sein kann, die Verstellrichtung der Betätigungsvorrichtung zur Einstellung der Fokussiervorrichtung 7, beispielsweise durch Pfeile, die je nach Verstellgröße auch unterschiedliche Länge aufweisen können, dargestellt werden. Anstelle der Pfeile können natürlich auch alle anderen grafischen Symbole oder optische oder akustische Signale verwendet werden.

In einer weiteren Ausführungsvariante des Verfahrens zur Beobachtung und Entfernungsmessung ist vorgesehen, dass die Verfahrensschritte des Auslösen eines Messvorgangs, des Berechnens eines Werts der Entfernung des entfernten Objektes und der darauf basierenden Scharfstellung der Fokussiereinrichtung 7 wiederholt aufeinander folgend und nicht nur einmal durchgeführt werden. Damit wird eine höhere Genauigkeit des Werts der Entfernung und eine bessere Scharfeinstellung erreicht. Durch das fortdauernde Wiederholen dieser Mess-, Auswerte- und Scharfstellschritte ist es außerdem möglich, bei einem sich entfernenden bzw. bei einem sich nähernden Objekt automatisch und für den Beobachter sehr bequem die Scharfstellung durchführen zu können. In beiden, das heißt sowohl der halbautomatischen als auch der automatischen Scharfstellung gemäß den erfindungsgemäßen Verfahren wird der Vorteil erreicht, dass auch bei Dämmerung bzw. ganz allgemein bei ungünstigen Lichtverhältnissen eine bequeme und zuverlässige Scharfstellung erfolgen kann. Das erfindungsgemäße Beobachtungsgerät 1 bzw. die beschriebenen Verfahren mit automatischer bzw. halbautomatischer Scharfstellung sind damit insbesondere auch vorteilhaft gegenüber konventionellen Autofokus-Systemen. Dieser Vorteil kann sowohl bei dem erfindungsgemäßen binokularen Beobachtungsgerät als auch bei einer nur aus einem Beobachtungsteil 3, 4 gebildeten fernoptischen Einrichtung, z.B. terrestrische Teleskope der Zielfernrohre erreicht werden.

Die Figur 5 zeigt ein Schema eines Laserentfernungsmessers 2 mit mehreren Messbereichen bzw. Strahlengängen 16 des Lasersenders 14. In einem dementsprechenden Ausführungsbeispiel des Laserentfernungsmessers können dazu beispielsweise mehrere Lasersender 14 vorgesehen sein. Entsprechend deren relativer Anordnung zueinander sind auch am Ort des Laserempfängers 21 mehrere Empfangsbereiche bzw. mehrere Empfänger 21 vorgesehen. Mit einer dem gemäßen Ausbildung von mehreren Strahlengängen 16 des Lasersenders 14 ist es möglich neben der Entfernung eines zentralen Objektes gleichzeitig auch die Werte der Entfernungen weiterer in dem Zielraum neben einem zentralen Objekt befindlicher Objekte zu messen und zur Anzeige zu bringen. Bei einem in seiner Richtung fixierten Beobachtungsgerät 1 ist damit auch ein Verfahren zur Messung der Bewegung bzw. der Geschwindigkeit eines sich in dem Zielraum bewegenden Objektes möglich. Bewegt sich ein Objekt im Zielraum durch zwei oder mehrere der gemäß Figur 5 angedeuteten Bereiche von Strahlengängen 16 so ist dies mit durch die Steuereinheit 24 registrierten, sprunghaften Änderungen der jeweiligen Werte der Entfernung verbunden. Aus den dabei registrierten Entfernungswerten als auch der zeitlichen Aufeinanderfolge der sprunghaften Entfernungswerthänderungen kann auf Grundlage der jeweiligen Winkelabstände der Messbereiche auf die Bewegung als auch auf die Geschwindigkeit der Bewegung eines Objektes in dem Zielraum geschlossen werden.

Gemäß einer alternativen Ausführungsvariante entsprechend einem Beobachtungsgerät 1 gemäß Figur 5 mit mehreren Strahlengängen 16 des Lasersenders sind nicht mehrere Lasersender 14 vorhanden, sondern wird das Bild des einen Lasersenders 14 mit Hilfe eines entsprechenden optischen Bauelements in zeitlicher Aufeinanderfolge in unterschiedliche Raumwinkelbereiche abgelenkt. Es erfolgt somit eine zeitlich aufeinander folgende Abtastung der mehreren Beobachtungsbereiche gemäß Figur 5.

Gemäß einem weiteren Ausführungsbeispiel des Verfahrens zur Beobachtung und Entfernungsmessung ist in dem Lasersender 14 ein optisches Bauelement zur kontinuierlichen Veränderung der Richtung des Strahlengangs 16 des Lasersenders 14 vorgesehen. Damit ist beispielsweise ein zeilenweises, kontinuierliches Abtasten des Raumwinkelbereichs des Gesichtsfelds des Beobachtungsgerätes 1 möglich.

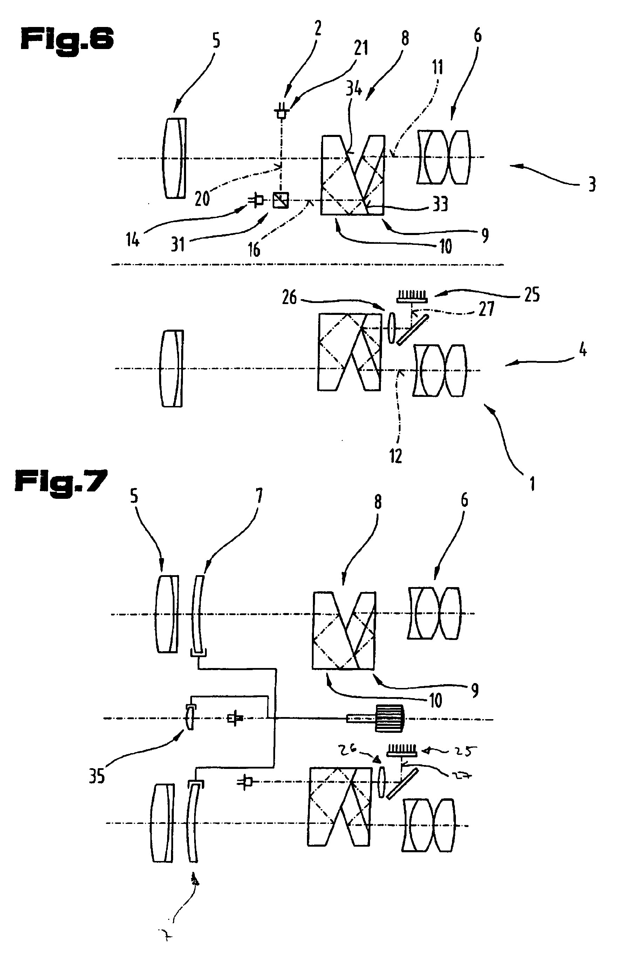

Die Figur 6 zeigt ein weiteres Ausführungsbeispiel eines binokularen Beobachtungsgeräts 1 mit einer fernoptischen Einrichtung, mit dem Objektiv 5 und dem Okular 6. Der wiederum nur durch seinen Hauptstrahl vereinfacht dargestellte Strahlengang 11 ist, so wie auch bei dem Ausführungsbeispiel gemäß Figur 1, durch ein Umkehrsystem 8, in seinem Verlauf umgelenkt, wobei jedoch der Aufbau des Umkehrsystems 8 einem anders gearteten Prismensystem, wie jenem in Figur 1 gezeigten, entspricht. Von dem Objektiv 5 kommend ist in der Abfolge zunächst das Umlenkprisma 10 und daran anschließend das Dachkantprisma 9 vorgesehen, wobei die beiden Prismen 9, 10 an einer Giebelfläche 33 des Dachkantprismas 9 miteinander verkittet bzw. aneinander anliegend angeordnet sind. An der an das Umlenkprisma 10 anliegenden Giebelfläche 33 ist diese mit einer Strahlen teilenden Beschichtung versehen. Diese ist vorzugsweise für den Spektralbereich der Beobachtungsstrahlen transmittierend und für den Spektralbereich des von dem Anzeigeelement 25 verwendeten Lichts reflektierend. Demgemäß verläuft der Strahlengang 16 des Lasersenders 14 nach Durchtritt des Strahlenteilers 31 und Reflexion an der Strahlen teilenden Beschichtung 33 und weiteren 3 Reflektionen in dem Umlenkprisma 17 parallel zu dem ersten visuellen Strahlengang 11. Von einem entfernten Objekt reflektiertes Laserlicht nimmt den umgekehrten Weg und wird nach Reflexion an der Strahlen teilenden Beschichtung in der Giebelfläche 33 durch den Strahlenteiler 31 auf den Empfänger 21 hin abgelenkt. Somit sind auch bei dem Beobachtungsgerät 1 gemäß diesem Ausführungsbeispiel sowohl ein Teil des Strahlengangs 16 des Lasersenders 14 als auch ein Teil des Strahlengangs 20 des Empfängers 21 in den ersten visuellen Strahlengang 11 integriert. Der Übergang des Strahlengangs 16 als auch des Strahlengangs 20 des Lasersenders 14 bzw. des Empfängers 21 in den ersten visuellen Strahlengang 11 ist an der Giebelfläche 33 lokalisiert.

Gemäß dem beschriebenen Ausführungsbeispiel ist das Einblenden des Anzeigeelementes 25 in den okularseitigen Teil des zweiten visuellen Strahlengangs 12 in den zweiten Beobachtungsteil 4 vorgesehen, wohin gegen die Strahlengänge 16, 20 in den ersten Beobachtungsteil 3 integriert sind. Alternativ dazu ist es aber auch möglich den Strahlengang 27 des Anzeigeelements 25 in den ersten Beobachtungsteil 3 zu integrieren.

In einer alternativen Ausführungsvariante des Beobachtungsgeräts 1 gemäß Figur 6 könnte der Bereich des Übergangs zwischen den Strahlengängen 16, 20 und dem ersten visuellen Strahlengang 11 auch in der an die Giebelfläche 33 anschließenden Fläche 34 des Umlenkprismas 10 lokalisiert sein. Dazu ist die Fläche 34 mit einer Strahlenteilenden Beschichtung zu versehen.
Die Figur 7 zeigt ein Beobachtungsgerät 1 mit einem Laserentfernungsmesser 2 bei dem für den Strahlengang 16 des Lasersenders 14 eine von den visuellen Strahlengängen 11, 12 separierte Anordnung und somit ein dritter Strahlengang vorgesehen ist.

Zur Scharfstellung ist in den ersten und zweiten visuellen Strahlengang 11, 12 jeweils eine durch eine Fokussierlinse gebildete Fokussiereinrichtung 7 integriert. Indem Strahlengang 16 des Lasersenders 14 ist objektseitig vor dem Lasersender 14 eine Senderfokussiereinrichtung 35 angeordnet. Durch Verstellen der Senderfokussiereinrichtung 35 kann eine Scharfstellung des Bildes des Lasersenders 14 in die Objektebene eines entfernten Objekts erreicht werden. Erfindungsgemäß ist bei diesem Beobachtungsgerät 1 vorgesehen, dass die Senderfokussiereinrichtung 35 mit der Fokussiereinrichtung 7 der beiden visuellen Strahlengänge 11, 12 gekoppelt ist, sodass gleichzeitig mit der Fokussierung der Bilder der visuellen Strahlengänge 11, 12 eine Fokussierung des Bildes des Lasersenders 14 erfolgen kann.

Auch mit den Beobachtungsgeräten 1 gemäß den in den Figuren 6 und 7 beschriebenen Ausführungsbeispielen ist eine Verfahrensweise entsprechend einem der vorstehend beschriebenen Verfahren zur Beobachtung und Messung der Entfernung und insbesondere einer automatisch bzw. halbautomatisch erfolgenden Scharfstellung möglich.

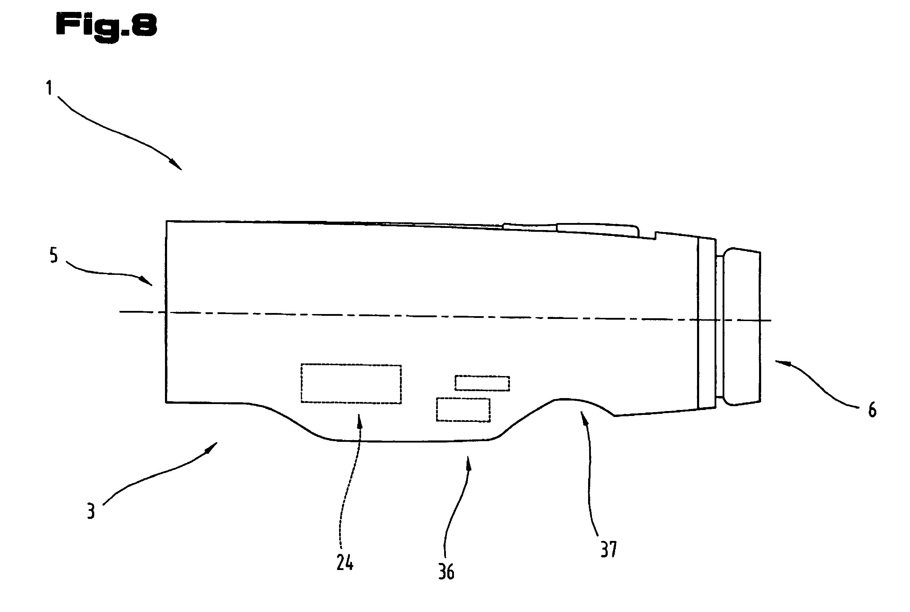

Die Figur 8 zeigt eine Seitenansicht des Beobachtungsgerätes 1 gemäß Figur 1. Darstellungsgemäß weisen die Beobachtungsteile 3, 4 eine annähernd tubusartige Grundform auf. In einem unteren Bereich des Beobachtungsteils 3, 4 umfasst dieser eine kielartig ausgeformte Gehäuseerweiterung 36. In einem daran anschließenden, dem Okular 6 zugewandten Bereich des Beobachtungsteils 3, 4 ist außerdem eine Daumenvertiefung 37 ausgebildet. Die Gehäuseerweiterung 36 bildet einen inneren Aufnahmebereich für die Vorrichtungselektronik insbesondere für die Steuer- und Auswerteeinheit 24. Andererseits weist die äußere Form der Gehäuseerweiterung 36 und der Daumenvertiefung 37 eine besonders günstige ergonomische Ausformung bzw. Griffgestaltung auf, sodass ein bequemes Halten des Beobachtungsgeräts 1 in an den Handballen anliegender Weise gewährleistet ist. Darüber hinaus hat diese Formgebung auch noch den Vorteil einer verbesserten Hebelwirkung insoweit eine Verschwenkung der beiden Beobachtungsteile 3, 4 des Beobachtungsgeräts 1 erleichtert wird. Ebenso wird die Augenweiteneinstellung im Falle einer linearen Verschiebung der Beobachtungsteile 3, 4 zueinander begünstigt.

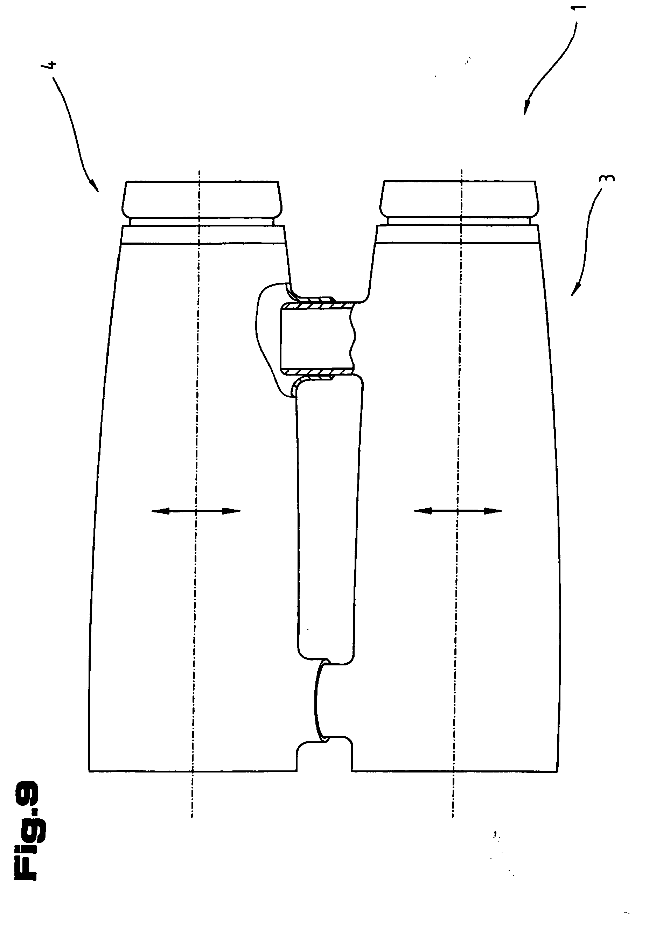

Die Figur 9 zeigt ein Beobachtungsgerät 1 mit einer alternativen Ausführungsform der Augenweiteneinstellung der beiden Beobachtungsteile 3, 4. Dazu ist zwischen den Beobachtungsteilen 3, 4 zumindest eine teleskopartig ausgebildete Verbindung vorgesehen, die eine lineare Verschiebung der Beobachtungsteile 3, 4 zueinander in einer zu den Längserstreckungen der beiden Beobachtungsteile 3, 4 senkrechten Richtung ermöglicht. Zur bequemeren Augenweiteneinstellung kann weiters ein Stellrad (nicht dargestellt) zur Betätigung eines die Augenweite bestimmenden Stellgetriebes vorgesehen sein.

Gemäß einer weiteren Ausführungsform des Beobachtungsgerätes 1 gemäß Fig. 9 ist vorgesehen, dass die Beobachtungsteile 3 und 4 ein modulares Beobachtungsgerät 1 bilden. Demnach kann der erste Beobachtungsteil 3 von dem zweiten Beobachtungsteil 4 getrennt bzw. abgekoppelt werden, sodass der Beobachtungsteil 3 als eine selbstständige fernoptische Einrichtung verwendet werden kann, wobei auch das Anzeigeelement 25 in diese integriert ist. So kann der erste Beobachtungsteil 3 beispielsweise auf ein Stativ aufgesetzt werden und solcherart eigenständig als Laserentfernungsmesser fungieren.

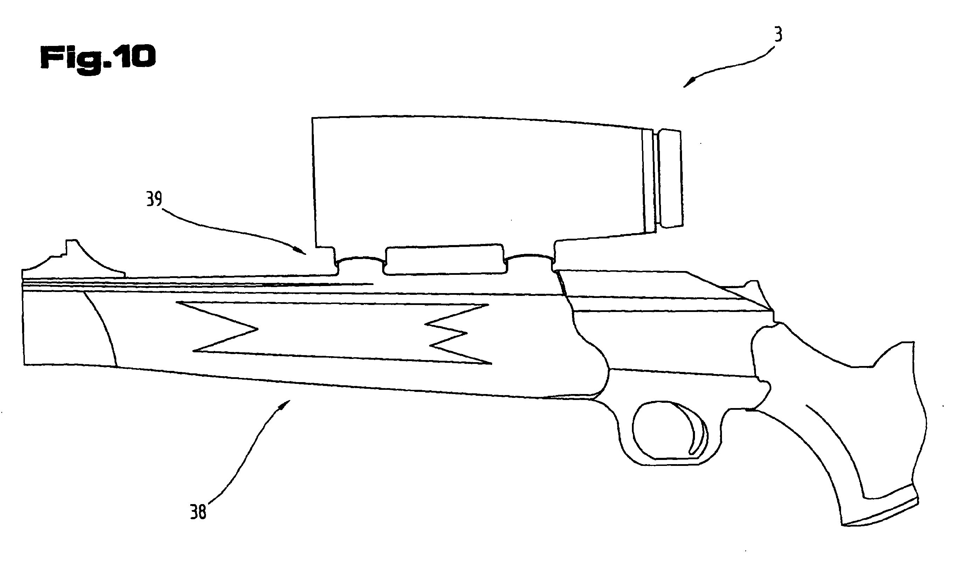

Eine alternative Anwendungsmöglichkeit des modular aufgebauten Beobachtungsgeräts gemäß Fig. 9 ist in Fig. 10 dargestellt. Dabei ist der Beobachtungsteil 3 als Zielfernrohr einer Waffe 38 dargestellt. Nach Abtrennung von dem zweiten Beobachtungsteil 4 (Fig. 9), wird der erste Beobachtungsteil 3 auf einem entsprechend gestalteten Montageträger 39 aufgesetzt und derart mit der Waffe 38 fest verbunden. Der Benutzer hat nun weiters die Möglichkeit, über die softwaregesteuerte Geräteelektronik die Ausgabe an dem Anzeigeelement 25, in das auch die Funktion der Zielmarke 28 integriert ist, seinen Bedürfnissen entsprechend zu gestalten. So kann der Benutzer beispielsweise die horizontale Ausrichtung der Entfernungsanzeige in dem Gesichtsfeld festlegen, als auch aus einer vorgegebenen Anzahl von Absehen eine Zielmarke 28 für die weitere Benutzung des Beobachtungsteils 3 als Zielfernrohr festlegen.

In der vorstehenden Beschreibung wurde exemplarisch stets von einem Laser-Entfernungsmesser 2 bzw. einem Lasersender 14 gesprochen. Ein auf dem Gebiet tätiger Fachmann wird verstehen, dass die Erfindung nicht auf die Verwendung von Lasern eingeschränkt ist und auch andere geeignete Strahlungsquellen in dem Beobachtungsgerät 1 bzw. der beschriebenen fernoptischen Einrichtung verwendet werden können.

Erfindungsgemäß kann das binokulare Beobachtungsgerät zwei getrennte Gelenkachsen aufweisen, zwischen denen eine Freiraum vorhanden ist, der seitlich von den Beobachtungsteilen 3, 4 begrenzt ist. Ein solches binokulares Beobachtungsgerät, insbesondere Fernglas, weist zwei visuelle Strahlengänge mit einem Entfernungsmesser unter Verwendung eines Messstrahles mit einem Strahlensender und einem Strahlenempfänger, auf. Ein Teil eines Strahlenganges des Strahlensenders oder des Strahlenempfängers in dabei in zumindest einem Strahlengang integriert. Die beiden Beobachtungsteile 3, 4 sind über zwei in Richtung des Strahlenganges entlang der Beobachtungsrichtung voneinander distanzierte Verbindungsvorrichtungen, z.B. einer Gelenkbrücke oder Teleskopführung in ihrer Relativlage zueinander verstellbar verbunden. Vorteilhaft ist, wenn der Strahlensender und der Strahlenempfänger sowie die optischen Elemente der Strahlengänge für den Messstrahl bzw. den reflektierten Messstrahl und/oder der Anzeigeelemente bzw. Zielmarken sowie die Bauteile der Steuer- und Überwachungsvorrichtung sowie der Energieversorgungseinrichtung sich außerhalb des durch die beiden Beobachtungsteile zwischen den beiden Verbindungsvorrichtungen und die einander zugewandten Stirnseiten derselben begrenzten Freiraumes befinden.

Die Ausführungsbeispiele zeigen mögliche Ausführungsvarianten des binokularen Beobachtungsgeräts 1 bzw. der fernoptischen Einrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des binokularen Beobachtungsgeräts 1 bzw. der fernoptischen Einrichtung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.
Vor allem können die einzelnen in den Fig. 1, 2, 3, 4, 5; 6; 7; 8; 9 und 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Beobachtungsgerät
- 2: Laser-Entfernungsmesser
- 3: Erster Beobachtungsteil
- 4: Zweiter Beobachtungsteil
- 5: Objektiv

- 6: Okular
- 7: Fokussiereinrichtung
- 8: Umkehrsystem
- 9: Dachkantprisma
- 10: Umlenkprisma

- 11: Erster visueller Strahlengang
- 12: Zweiter visueller Strahlengang
- 13: Sendeoptiksystem
- 14: Lasersender
- 15: Sendeoptik

- 16: Strahlengang
- 17: Umlenkprisma
- 18: Teilerprisma
- 19: Fläche
- 20: Strahlengang

- 21: Empfänger
- 22: Empfangsoptiksystem
- 23: Empfängerprisma
- 24: Steuer- und Auswerteeinheit
- 25: Anzeigeelement

- 26: Anzeigeoptik
- 27: Strahlengang
- 28: Zielmarke
- 29: Strahlengang
- 30: Zielmarkenoptik

- 31: Strahlenteiler
- 32: Spiegel
- 33: Giebelfläche
- 34: Fläche
- 35: Senderfokussiereinrichtung

- 36: Gehäuseerweiterung
- 37: Daumenvertiefung
- 38: Waffe
- 39: Montageträger

## Patentansprüche

1. Binokulares Beobachtungsgerät, insbesondere Fernglas, mit zwei visuellen Strahlengängen und mit einem Laser-Entfernungsmesser mit einem Lasersender und einem Laserempfänger, wobei ein Teil eines Strahlengangs des Lasersenders in einen ersten visuellen Strahlengang integriert ist, und mit einem opto-elektronischen Anzeigeelement, **dadurch gekennzeichnet, dass** auch ein Teil eines Strahlengang des Laserempfängers in den ersten visuellen Strahlengang integriert ist.

2. Beobachtungsgerät nach Anspruch 1, **dadurch gekennzeichnet, dass** zur Integration des Strahlengangs des Lasersenders und des Strahlengangs des Laserempfängers in den ersten visuellen Strahlengang optische Bauelemente zur Bewirkung des Übergangs der Strahlengänge des Lasersenders und des Laserempfängers angeordnet sind.

3. Beobachtungsgerät nach einem der Ansprüche 1 oder 2, **dadurch gekennzeichnet, dass** Bereiche des Übergangs an einem einzigen optischen Bauelement lokalisiert sind.

4. Beobachtungsgerät nach einem der vorhergehenden Ansprüche, **dadurch gekennzeichnet, dass** die Bereiche des Übergangs an einer einzigen Fläche des einen optischen Bauelements lokalisiert sind.

5. Fernoptische Einrichtung mit einem visuellen Strahlengang und mit einem Laser-Entfernungsmesser mit einem Lasersender und einem Laserempfänger, wobei ein Teil eines Strahlengangs des Lasersenders und ein Teil eines Strahlengangs des Laserempfängers in dem visuellen Strahlengang verlaufen, und wobei Bereiche der Umlenkung an optischen Bauelementen lokalisiert sind, und mit einem opto-elektronischen Anzeigeelement, **dadurch gekennzeichnet, dass** die Bereiche der Umlenkung an einem einzigen optischen Bauelement lokalisiert sind.

6. Fernoptische Einrichtung mit einem visuellen Strahlengang mit einem Umkehrsystem und mit einem Laser-Entfernungsmesser, mit einem Lasersender und einem Laserempfänger und mit einem opto-elektronischen Anzeigeelement, wobei ein Teil eines Strahlengangs des Lasersenders und ein Teil eines Strahlengangs des Laserempfängers in dem visuellen Strahlengang verlaufen, **dadurch gekennzeichnet, dass** Bereiche der Umlenkung an optischen Bauelementen lokalisiert sind, die Bestandteile des Umkehrsystems bilden.

7. Einrichtung nach Anspruch 6, **dadurch gekennzeichnet, dass** die Bereiche der Umlenkung an ein und demselben optischen Bauelement lokalisiert ist.

8. Einrichtung nach einem der Ansprüche 6 oder 7, **dadurch gekennzeichnet, dass** die Bereiche der Umlenkung an einer einzigen Fläche des optischen Bauelements lokalisiert ist.

9. Einrichtung nach einem der Ansprüche 6 bis 8, **dadurch gekennzeichnet, dass** das Umkehrsystem durch ein Prismensystem gebildet ist.

10. Binokulares Beobachtungsgerät, insbesondere Fernglas, mit zwei visuellen Strahlengängen und mit einem Laser-Entfernungsmesser mit einem Lasersender und einem Laserempfänger, wobei ein Teil eines Strahlengangs des Lasersenders oder des Laserempfängers in einen ersten visuellen Strahlengang integriert ist, und wobei der Strahlengang des Laserempfängers oder des Lasersenders als ein dritter Strahlengang angeordnet ist, und mit einem opto-elektronischen Anzeigeelement, **dadurch gekennzeichnet, dass** der dritte Strahlengang eine Sender-Fokussiereinrichtung umfasst, die mit einer Fokussiereinrichtung der beiden visuellen Strahlengänge zur Fokussierung auf ein entferntes Objekt zusammenwirkend gekoppelt ist.

11. Verfahren zur Beobachtung und Messung der Entfernung eines entfernten Objekts mit einer fernoptischen Einrichtung mit einem visuellen Strahlengang und mit einem Laser-Entfernungsmesser mit einem Lasersender und einem Laserempfänger, **dadurch gekennzeichnet, dass**
a) das Objekt mittels des visuellen Strahlengangs anvisiert wird
b) und durch Aussenden eines Laserimpulses von dem Lasersender der Messvorgang ausgelöst wird und eine Laufzeit ermittelt wird,
c) worauf durch eine Steuer- und Auswerteeinrichtung ein Wert der Entfernung zum entfernten Objekts berechnet und angezeigt wird
d) und basierend auf dem Wert der Entfernung eine Scharfstellung durch Verstellung einer Fokussiereinrichtung durchgeführt wird.

12. Verfahren nach Anspruch 11, **dadurch gekennzeichnet, dass** die Scharfstellung halbautomatisch durchgeführt wird.

13. Verfahren nach Anspruch 11 oder 12, **dadurch gekennzeichnet, dass** die Scharfstellung automatisch durchgeführt wird.

14. Verfahren nach einem der Ansprüche 11 bis 13, **dadurch gekennzeichnet, dass** nach dem Anvisieren des Objekts zunächst eine manuelle Grobeinstellung der Scharfstellung durchgeführt wird.

15. Verfahren nach einem der Ansprüche 11 bis 14, **dadurch gekennzeichnet, dass** die Verfahrensschritte des Auslösens eines Messvorgangs, des Berechnens eines Werts der Entfernung des entfernten Objektes und der darauf basierenden Scharfstellung der Fokussiereinrichtung wiederholt aufeinander folgend durchgeführt werden.

16. Verfahren nach Anspruch 15, **dadurch gekennzeichnet, dass** die Verfahrensschritte zur Beobachtung eines bewegten Objekts kontinuierlich wiederholt werden.
